# EUROPÄISCHE PATENTANMELDUNG

(11) **EP 1 674 379 A1**
(43) Veröffentlichungstag der Anmeldung: **28.06.2006**
(21) Anmeldenummer: 05027432.3
(22) Anmeldetag: 15.12.2005
(51) Int. Cl.: B62D 33/06, B60J 5/04, E05D 15/28, B60R 1/06, E05F 15/04

(54) **Fahrzeugtür**

(30) Priorität: 24.12.2004 DE 102004062485
(71) Anmelder: DaimlerChrysler AG, 70567 Stuttgart (DE)
(72) Erfinder: Stechow, Roland, 70372 Stuttgart (DE)

(57) **Zusammenfassung**

Die Erfindung betrifft Fahrzeugtür für einen Kraftwagen (4), die am vorderen Ende einer Seitenwand (6) nahe eines Eckbereiches (8) zwischen der Seitenwand (6) und einer Stirnwand (10) angeordnet ist und die einen Türflügel (12) umfasst, der von einer Schließposition (14) in eine Öffnungsposition (16) verlagerbar ist. Die Erfindung zeichnet sich dadurch aus, dass der Türflügel (12) um das vordere Ende der Seitenwand (6) herum vor die Stirnwand (20) des Kraftwagens (4) bewegbar ist.

## Beschreibung

Die Erfindung betrifft eine Fahrzeugtür nach dem Oberbegriff des Patentanspruchs 1.

Bei Kraftwagen, insbesondere bei Nutzfahrzeugen des öffentlichen Verkehrs, wie Omnibussen, werden häufig Schwenktüren eingesetzt, wie sie beispielsweise in der DE 203 20 029 U1 oder in der DE-AS 19 54 653 beschrieben sind. Derartige Schwenktüren sind im Innenraum des Fahrzeuges an einer Drehachse gelagert und mit Bügelscharnieren, die zu einem Türflügel führen, versehen. Bei Drehen der Drehachse wird der Türflügel in der Regel parallel zur Fahrzeugseitenwand nach hinten ausgeschwenkt.

Bei Lastfahrzeugen, insbesondere bei Niederflurfahrzeugen, wie sie beispielsweise in der kommunalen Müllentsorgung eingesetzt werden, ist eine derartige Türschwenköffnung nicht möglich, da der Türflügel in einer Öffnungsposition mit eingeschlagenen Vorderrädern kollidieren würde.

Es ist jedoch bei vielen Nutzfahrzeugen erforderlich, dass die Tür insgesamt Platz sparend zu öffnen ist, weshalb einige Hersteller beispielsweise Falttüren einsetzen, die die Türöffnung jedoch stark verkleinern. Das Ausschwenken einer von Omnibussen bekannten Schwenktür nach vorne kommt in anderen Fahrzeugen zur Anwendung, wobei dies jedoch dazu führt, dass die Schwenktür sehr stark nach vorne steht und die Unfallgefahr erhöht wird.

Die Aufgabe der Erfindung besteht darin, eine Fahrzeugtür für einen Kraftwagen bereitzustellen, die in ihrer Öffnungsposition und während des Öffnens an sich den Betrieb des Kraftwagens nicht behindert, und einen bequemen Einstieg in das Fahrzeug ermöglicht.

Die Lösung der Erfindung besteht in einer Fahrzeugtür mit den Merkmalen des Patentanspruchs 1.

Die erfindungsgemäße Fahrzeugtür nach Patentanspruch 1 für einen Kraftwagen ist am vorderen Ende einer Seitenwand, nahe eines Eckbereiches zwischen der Seitenwand und der Stirnwand angeordnet. Die Fahrzeugtür umfasst einen Türflügel, der von einer Schließposition in eine Öffnungsposition verlagerbar ist. Die Erfindung zeichnet sich dadurch aus, dass der Türflügel um das vordere Ende der Seitenwand herum vor die Stirnwand des Kraftwagens bewegbar ist. Durch das Schwenken des Türflügels vor die Stirnwand des Kraftwagens, steht zum Einstieg in den Innenraum des Kraftwagens die maximale Türöffnung zur Verfügung. Das Fahrzeug kann auch bei geöffneter Fahrzeugtür bewegt werden, ohne dass es Gefahr läuft, seitlich mit Hindernissen zu touchieren.

Dabei kann es vorteilhaft sein, die Fahrertür mit einer bevorzugt großflächigen, transparenten Scheibe zu versehen, wodurch in der Öffnungsposition dem Fahrer die Sicht durch die Windschutzscheibe und durch die Fahrzeugtür hindurch gestattet wird. Das Manövrieren des Fahrzeuges wird so weiter vereinfacht.

Der Türflügel ist in einer Ausgestaltungsform der Erfindung durch mindestens ein Bügelscharnier mit einer, im Innenraum des Kraftwagens angeordneten Drehachse verbunden. Durch Drehen der Drehachse wird so der Türflügel von der Schließposition in die Öffnungsposition bewegt. Die Anwendung von Bügelscharnieren ist technisch leicht zu realisieren und erfordert keine weitere aufwendige Mechanik.

Die Bewegung des Türflügels von der Schließposition in die Öffnungsposition beträgt in vorteilhafter Weise zwischen 200° und 280°. Durch eine derartige Türflügelschwenkung ist der Türflügel ausreichend vor der Stirnwand des Kraftwagens positioniert, so dass die Vorteile der freien Bewegung des Fahrzeuges und der freien Zugänglichkeit der Türöffnung gewährleistet sind.

Die Drehachse, an der die Bügelscharniere angeordnet sind ist in einer Ausgestaltungsform der Erfindung in Form einer vertikal verlaufenden Stange ausgebildet. Die Bügelscharniere sind hierbei bevorzugt im oberen und im unteren Bereich der vertikal verlaufenden Stange angeordnet. Somit ist die Drehbewegung der Bügelscharniere Platz sparende im oberen und unteren Bereich des Fahrerhauses untergebracht, wo sie keine weitere Behinderung darstellt.

Eine Rückspiegelhalterung, die am Fahrerhaus vorgesehen ist, kann oberhalb des Türflügels am Fahrerhaus angeordnet sein. Dabei ist der Rückspiegel durch ein Abstandselement außerhalb des Schwenkbereichs des Türflügels positioniert.

Die Anwendung der erfindungsgemäßen Fahrzeugtür ist beispielsweise bei Niederflurkraftwagen vorteilhaft. Derartige Fahrzeuge werden oft im kommunalen Servicebereich eingesetzt, wo insbesondere das langsame Fahren mit geöffneter Tür häufig erforderlich ist. Ebenso vorteilhaft ist die erfindungsgemäße Fahrzeugtür bei Transportern für Paketdienste anwendbar.

Weitere vorteilhafte Ausgestaltungsformen der Erfindung sind anhand der folgenden Figuren näher erläutert.

Dabei zeigen:
- Fig. 1: ein Fahrerhaus für ein Niederflurkraftwagen mit geschlossenem Türflügel,
- Fig. 2: ein Fahrerhaus nach Figur 1 mit geöffnetem Türflügel,
- Fig. 3: einen Schnitt durch den Türflügel im geschlossenen Zustand mit Blick auf ein Bügelscharnier und eine vertikale Drehstange,
- Fig. 4: denselben Ausschnitt des Fahrerhauses, wie in Figur 3 mit geöffnetem Türflügel,
- Fig. 5: eine Draufsicht auf das Fahrerhaus mit Darstellung des Sichtfeldes des Fahrers und
- Fig. 6: einen Bewegungsablauf beim Öffnen des Türflügels in mehreren verschiedenen Zwischenstationen.

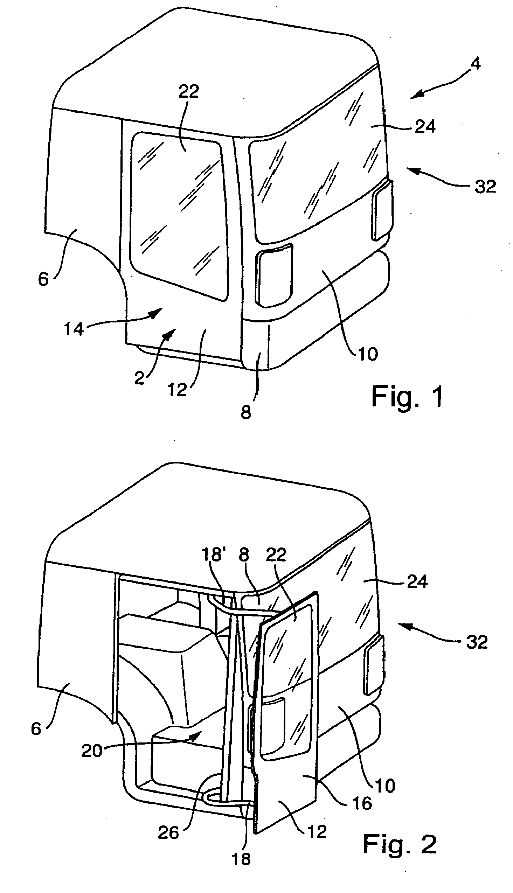

In Figur 1 ist das Fahrerhaus 32 eines Niederflurlastkraftwagens 4 dargestellt, wie er üblicherweise im kommunalen Servicebereich eingesetzt wird. Derartige Fahrzeuge werden beispielsweise für Straßenreinigung oder für die Müllabfuhr verwendet. Das Fahrerhaus 32 ist hierbei ohne Benutzung einer Treppe beziehungsweise eines Auftrittes für den Fahrer erreichbar. Auf der Beifahrerseite (jedoch auch möglicherweise auf der Fahrerseite) ist eine Fahrzeugtür 2 vorgesehen, die mit einer Glasscheibe 22 versehen ist und in Figur 1 in geschlossenem Zustand (Schlussposition 14) dargestellt ist. Das gleiche Fahrerhaus 32 aus Figur 1 ist in Figur 2 mit geöffnetem Türflügel 12 dargestellt. Bei der Öffnung des Türflügels 12 (Öffnungsposition 16) erfolgt eine Bewegung desselben von der Schließposition 14 (Figur 1) in eine Öffnungsposition 16 (Figur 2). Hierbei wird der Türflügel 12, der in der Schließposition 14 an einer Seitenwand 6 des Kraftwagens 4 angeordnet ist, um einen Eckbereich 8 des Kraftwagens 4 herum vor eine Stirnwand 10 des Kraftwagens 4 bewegt. In der Öffnungsposition 16 des Türflügels 12 befindet sich dieser vor der Stirnwand 10 des Kraftwagens 4.

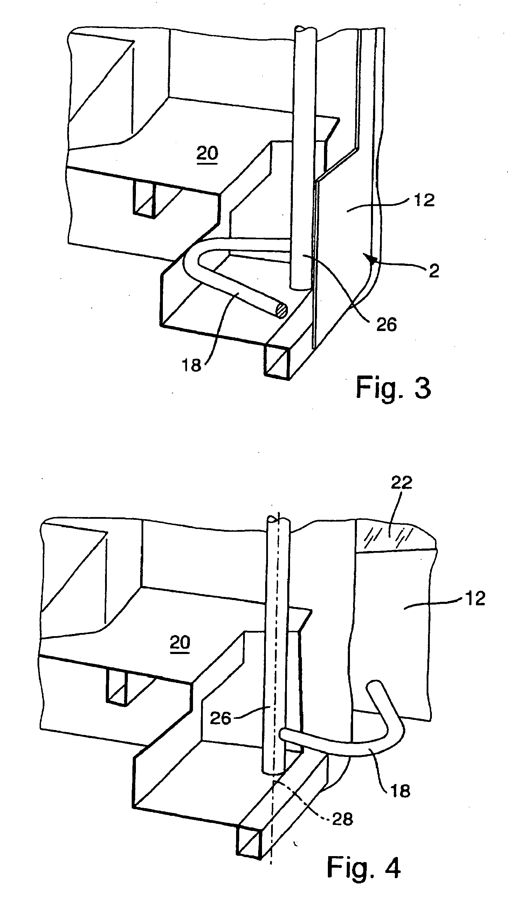

Für die Bewegung des Türflügels 12 von der Schließposition 14 zur Öffnungsposition 16, ist wie in den Figuren 3 und 4 näher veranschaulicht, im Innenraum 20 des Kraftwagens 4, hier im Innenraum 20 des Fahrerhauses 32 eine vertikal verlaufende Stange 26 angeordnet, die als Drehachse 28 dient. Zwischen der Stange 26 und dem Türflügel 12 sind Bügelscharniere 18 vorgesehen, die zum einen im unteren Bereich (Bügelscharnier 18) und zum anderen im oberen Bereich (Bügelscharnier 18') angeordnet sind. In Figur 1 ist zur besseren Einsicht ein Schnitt durch den Türflügel 12 dargestellt, der den Einblick in den Innenraum 20 des Fahrerhauses 32 in der Schließposition 14 erlaubt. Das Bügelscharnier 18, das eine U-förmige Form aufweist, ist in dieser geschlossenen Position in den Innenraum 20 ragend angeordnet. Durch die Drehbewegung der Stange 26 werden die Bügelscharniere 18, die wiederum fest mit dem Türflügel 12 verbunden sind, um etwa 270° geschwenkt, wobei die U-förmige Ausformung des Bügelscharniers 18 um den Eckbereich 8 des Kraftwagens 4 herumragt und eine Positionierung des Türflügels 12 vor der Stirnwand 10 erlaubt.

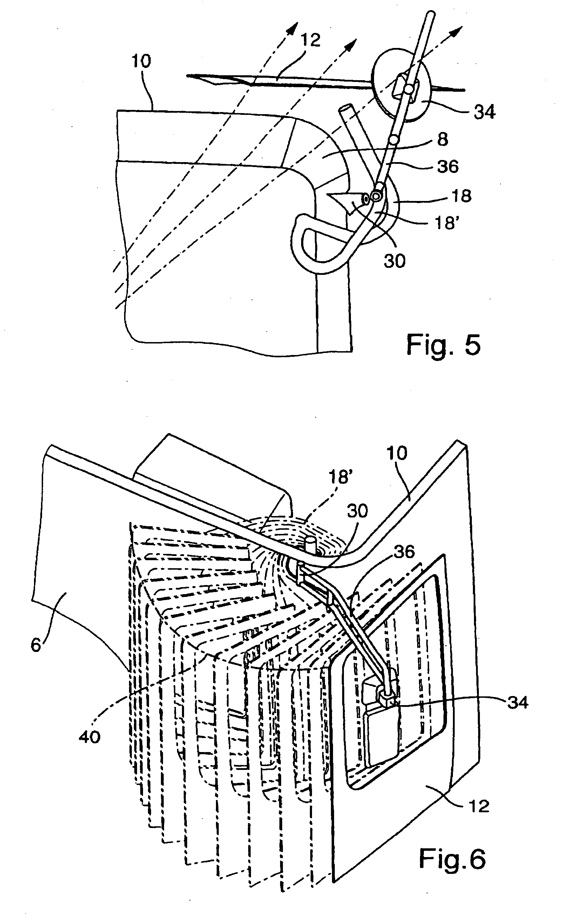

In den Figuren 3 und 4 sind die jeweiligen Endpositionen des Türflügels (Schließposition 14 und Öffnungsposition 16) dargestellt. Die Figur 6 wiederum veranschaulicht die Öffnungsbewegung des Türflügels 12 durch die schematische Darstellung von zahlreichen Zwischenpositionen. Die Öffnung des Türflügels 12 verläuft entlang eines Schwenkbereiches der in Figur 6 durch die Linie 40 veranschaulicht ist.

In Figur 5 ist eine Draufsicht auf den Kraftwagen 4 beziehungsweise das Fahrerhauses 4 gegeben, wobei durch die Pfeile 42 das Sichtfeld des Fahrers markiert ist. Durch die Anordnung einer Scheibe 22 im Türflügel 12 ist es für den Fahrer möglich, durch die Windschutzscheibe 24 und durch die Türscheibe 22 hindurch auf die Fahrbahn und auf den Straßenrand zu blicken.

In den Figuren 5 und 6 ist jeweils noch die Anordnung des Rückspiegels 34 dargestellt, der durch eine Rückspiegelhalterung 30 am Fahrerhaus 32 befestigt ist und über ein Abstandselement 36 in Form von zwei miteinander verbundenen und annähernd parallel laufenden Stangen den Rückspiegel 34 außerhalb des Schwenkbereichs 40 des Türflügels 12 hält.

Durch den in der Öffnungsposition 16 positionierten Türflügel 12 mit der Durchsicht durch die Windschutzscheibe 24 und durch die Türscheibe 22 ist ein langsames Fahren des Kraftwagens 4 mit geöffneten Türflügeln 12 möglich. Der Türflügel 12, der sich vor der Stirnwand 10 des Kraftwagens 4 befindet, behindert das Fahren somit nicht. Insbesondere im Bereich der Seitenwand 6 kann das Fahrzeug sehr nah an Wänden oder sonstigen Hindernissen bei geöffneten Türen manövriert werden, ohne das es zur Kollision kommt. Die Öffnung der Kraftwagentür 2 entspricht somit der gesamten Breite des Türflügels 12, weshalb ein bequemes Ein-/und Aussteigen beziehungsweise auch ein bequemes Beladen des Kraftwagens 4 ermöglicht wird.

Die Drehbewegung der Bügelscharniere 18 entlang der Drehachse 28 muss nicht in notwendiger Weise durch eine Stange 26 erfolgen, die das obere und untere Bügelscharnier 18, 18' miteinander verbindet. Grundsätzlich ist es auch möglich die Bügelscharniere einzeln anzutreiben und im oberen beziehungsweise unteren Bereich des Fahrerhauses 32 separat zu lagern. Der Antrieb der Drehbewegung kann hydraulisch, pneumatisch oder durch Elektromotoren erfolgen. Der Türöffnungsmechanismus und dessen Steuerung basiert auf der bereits aus Omnibussen bekannten Technik.

Durch die geöffnete Tür in der Öffnungsposition 16 kann der Fahrer nicht nur auf die Fahrbahn und den Bordstein blicken, er hat auch gleich durch die genannte Anordnung aus Figur 5 und 6 den Rückspiegel im Blick. Beleuchtungseinheiten, wie Scheinwerfer beziehungsweise Blinker scheinen durch die Türscheibe 22 hindurch, wodurch das Fahrzeug weiterhin verkehrssicher bleibt.

## Patentansprüche

1. Fahrzeugtür für einen Kraftwagen (4), die am vorderen Ende einer Seitenwand (6) nahe eines Eckbereiches (8) zwischen der Seitenwand (6) und einer Stirnwand (10) angeordnet ist und einen Türflügel (12) umfasst, der von einer Schließposition (14) in eine Öffnungsposition (16) verlagerbar ist,
**dadurch gekennzeichnet,**
**dass** der Türflügel (12) um das vordere Ende der Seitenwand (6) herum vor die Stirnwand (20) des Kraftwagens (4) bewegbar ist.

2. Fahrzeugtür nach Anspruch 1
**dadurch gekennzeichnet,**
**dass** der Türflügel (16) durch mindestens ein Bügelscharnier (18) mit einer im Innenraum (20) des Kraftwagens angeordneten Drehachse (28) zur Bewegung des Türflügels (12) von der Schließposition (14) in die Öffnungsposition (16) in Verbindung steht.

3. Fahrzeugtür nach Anspruch 1 oder 2,
**dadurch gekennzeichnet,**
**dass** die Fahrzeugtür mit einer transparenten Scheibe (22) versehen ist,

4. Fahrzeugtür nach einem der Ansprüche 1 bis 3,
**dadurch gekennzeichnet,**
**dass** der Türflügel (12) von der Schließposition (14) zur Öffnungsposition (16) um einen Winkel zwischen 200° und 280° schwenkbar ist.

5. Fahrzeugtür nach einem der Ansprüche 1 bis 4,
**dadurch gekennzeichnet,**
**dass** die Drehachse (28) in Form einer vertikal verlaufenden Stange (26) ausgebildet ist, an der in einem oberen Bereich und in einem unteren Bereich ein Bügelscharnier (18) angeordnet ist.

6. Fahrzeugtür nach einem der Ansprüche 1 bis 5,
**dadurch gekennzeichnet,**
**dass** eine Rückspiegelhalterung (30) oberhalb des Türflügels (12) an einem Fahrerhaus (32) angeordnet ist und der Rückspiegel (34) durch ein Abstandselement (36) außerhalb des Schwenkbereiches (46) des Türflügels (12) gehalten ist.

7. Fahrzeugtür nach einem der vorhergehenden Ansprüchen,
**dadurch gekennzeichnet,**
**dass** der Kraftwagen (4) ein Niederflurkraftwagen ist.
